# EUROPEAN PATENT SPECIFICATION

(11) **EP 1 423 747 B1**
(45) Date of publication and mention of the grant of the patent: **07.06.2006**
(21) Application number: 02760466.9
(22) Date of filing: 16.08.2002
(51) Int. Cl.: G02F 1/1333, G02F 1/1339

(54) **DISPLAY DEVICE WITH AT LEAST ONE FLEXIBLE SUBSTRATE, AND METHOD FOR COUPLING THE SUBSTRATES**
ANZEIGEVORRICHTUNG MIT WENIGSTENS EINEM FLEXIBLEN SUBSTRAT UND VERFAHREN ZUR VERBINDUNG DER SUBSTRATE
DISPOSITIF D'AFFICHAGE COMPRENANT AU MOINS UN SUBSTRAT SOUPLE ET PROCEDE D'ACCOUPLEMENT DE SUBSTRATS

(30) Priority: 28.08.2001 EP 01203245
(43) Date of publication of application: 02.06.2004
(73) Proprietor: Koninklijke Philips Electronics N.V., 5621 BA Eindhoven (NL)
(72) Inventor: SLIKKERVEER, Peter, J., NL-5656 AA Eindhoven (NL); BOUTEN, Petrus, C., P., NL-5656 AA Eindhoven (NL); WILLARD, Nicolaas, P., NL-5656 AA Eindhoven (NL); NISATO, Giovanni, NL-5656 AA Eindhoven (NL); CIRKEL, Peter, A., NL-5656 AA Eindhoven (NL)
(74) Representative: van der Veer, Johannis Leendert
(86) International application number: PCT/IB2002/003462
(87) International publication number: WO 2003/019275

(56) References cited:
- EP-A- 1 072 931
- US-A- 5 379 139
- US-A- 5 943 113
- PATENT ABSTRACTS OF JAPAN vol. 1995, no. 03, 28 April 1995 (1995-04-28) & JP 06 337427 A (SHARP CORP), 6 December 1994 (1994-12-06)
- PATENT ABSTRACTS OF JAPAN vol. 2002, no. 02, 2 April 2002 (2002-04-02) -& JP 2001 305551 A (FUJI XEROX CO LTD), 31 October 2001 (2001-10-31)

## Description

The invention relates to a display device comprising an electro-optical material between a first substrate and a second, flexible substrate. More generally, the invention relates to a device comprising a plurality of (flexible) layers. The invention also relates to a method of mutually coupling (flexible) layers.

Examples of such a display device are the TFT-LCDs or AM-LCDs which are used in laptop computers and in organizers, but which also find an increasingly wider application in GSM telephones. The use of such display devices in what is called "paper white" applications is also increasingly being considered. The display device then has the appearance of a newspaper. Since the substrate (for example, a polymer) is flexible, it may be fully or partly bent. This flexibility also allows their use in what are called "wearable displays". Instead of LCD devices, for example, (polymer) LED display devices or display devices based on other effects may be used.

Increasing use of such flexible substrates is also being made in other electronic fields. In these fields, transistors and other components are formed from synthetic materials. Labels, credit cards and other forms of identification means are feasible examples. The "plastic electronics" should usually be accommodated in a housing having approximately the same or a greater flexibility.

Another advantage of using flexible substrates is that a plurality of display devices can be manufactured simultaneously by means of continuous web processing such as, for example, reel-to-reel processing. The manufacture of one or more display devices by laminating (large) substrates is alternatively possible. Dependent on the width of the reels used and the length and width of a reel of (substrate) material, a great many separate (display) cells or (in the case of "plastic electronics") separate (semi-)products can be made in these processes. Such processes are therefore very attractive for bulk manufacture of said display devices and (semi-)products.

When manufacturing display devices by means of continuous web processing such as, for example, reel-to-reel processing, there is, however, the problem of mutual alignment of the first and the second substrate. Where this alignment takes place by means of alignment marks on glass substrates, such an optical alignment step is usually impossible in a continuous web process. In these continuous web processes, broad reels of flexible material are often used which are (coarsely) aligned with respect to each other only via sprocket holes on their edges. Consequently, and due to the inherent stretch, corresponding parts of display devices to be formed are displaced with respect to each other.

Due to the possible stretch (or compression) of one or both substrates, the risk of misalignment is even present in smaller substrates.

It is an object of the present invention to prevent one or more of the above-mentioned problems as much as possible. In a display device according to the invention, at least parts of external sides of the adjusting means on the one substrate are in mechanical contact with at least parts of external sides of the adjusting means on the other substrate.

By having the adjusting means make mechanical contact, desired parts of the substrates (or flexible layers) are adjusted with respect to each other in such a way that possible misalignment at the start of continuous web processes can be corrected at a later stage (by using or not using spontaneous or deliberately introduced stretch (or compression)). In this case, the adjusting means glide along each other, as it were. Said adjustment is therefore impossible with adjusting means that fit into each other such as, for example, spacers, as described in USP 4,653,864, in which a cavity in the spacer on the one substrate encloses a projecting part of the spacer on the other substrate.

The substrates do not necessarily have to be both flexible. Neither do all adjusting means on one substrate necessarily have to be in contact with adjusting means on the other substrate. For a satisfactory alignment, it is often sufficient that a part of the adjusting means on one substrate is in contact with adjusting means on the other substrate.

The adjustment according to the invention is achieved advantageously with a contact face between adjusting means, which contact face extends at an angle with respect to the substrates. The adjusting means may be profiled in different manners.

In a first embodiment, the adjusting means are provided with tapering walls in a plane perpendicular to the facing sides of the substrates. When joining the substrates together in a continuous web process such as, for example, a reel-to-reel process, the (tapering) walls glide along each other so that the adjusting means can thereby be placed against each other.

In another embodiment, at least one substrate has parts of external sides of adjusting means which, viewed in a plane parallel to the substrates, are situated at an acute angle with respect to each other. The external sides of adjusting means situated at an acute angle, for example, tapering walls, glide along each other towards the desired position, notably if one of the substrates has been slightly stretched in advance or if the substrates are displaced laterally with respect to each other.

The walls of adjusting means for two engaging sides of the adjusting means on different substrates are preferably not parallel but comprise partly complementary patterns. This provides, inter alia, the possibility of forming a snapped joint between two engaging adjusting means.

The adjusting means on one or both substrates may be alternatively provided with an adhesive layer.

The coupling described may also be used for aligning further layers in a display device (color filters, cholesteric layers, PDLC layers, etc.).

More generally, the invention relates to a device comprising a plurality of flexible layers with adjusting means on at least one side, in which at least two layers on the facing sides are provided with adjusting means, in which at least parts of external sides of the adjusting means on the one layer are in mechanical contact with at least parts of external sides of adjusting means on the other flexible layer.

In a method according to the invention, at least two substrates each provided with adjusting means are joined together via a supply mechanism, and parts of external sides of the adjusting means on a first substrate are brought into mechanical contact with at least parts of external sides of adjusting means of a second, flexible substrate for the purpose of adjustment.

At least one of the substrates is preferably stretched before it is brought into mechanical contact with the other substrate (and the assembly of substrates is subjected to a relaxation step after bringing the substrates into mechanical contact with each other in a direction perpendicular to the layers while applying a pressure).

As already mentioned, the process of adjusting and coupling may be performed continuously (for example, in a reel-to-reel process).

These and other aspects of the invention are apparent from and will be elucidated with reference to the embodiments described hereinafter.

In the drawings:
Fig. 1 is a diagrammatic plan view of a part of a display device according to the invention,
Figs. 2, 3 and 4 are cross-sections taken on the lines II-II, III-III and IV-IV in Fig. 1, both during manufacture and in a complete display device,
Fig. 5 is a diagrammatic plan view of a part of a substrate of a display device according to the invention,
Fig. 6 is a diagrammatic plan view of a part of a display device obtained by means of the substrates of Fig. 5,
Fig. 7 is a plan view of a part of a display cell,
Figs. 8, 9 show a variant of Fig. 5,
Figs. 10 and 11 show further adjusting means, while
Fig. 12 shows diagrammatically a method according to the invention, and
Figs. 13 and 14 show other devices according to the invention.

The Figures are diagrammatic and not drawn to scale; corresponding parts are generally denoted by the same reference numerals.

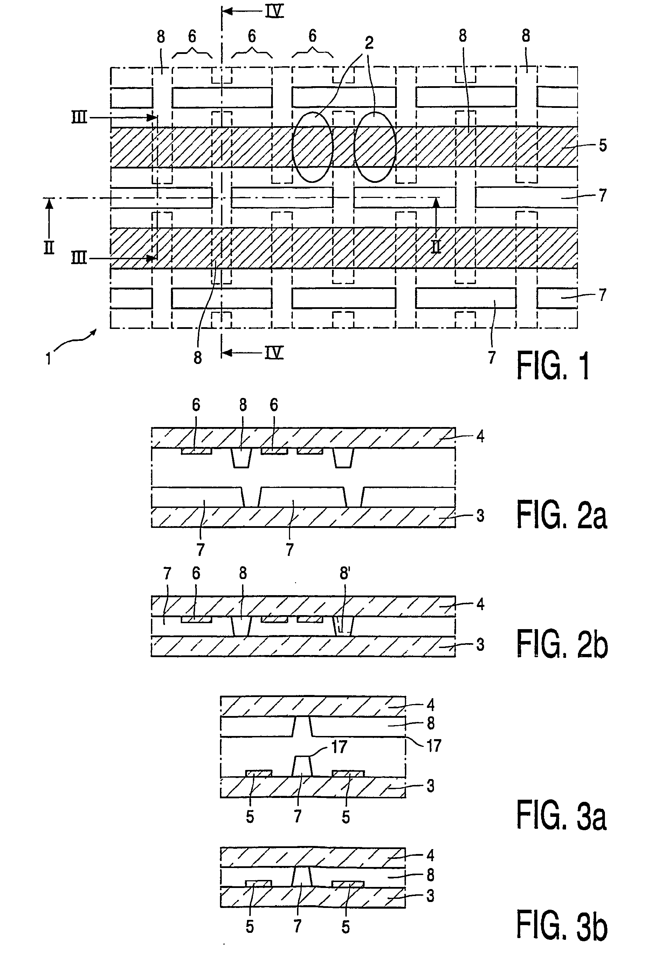

Fig. 1 is a diagrammatic plan view and Figs. 2, 3 and 4 are cross-sections of a part of a display device 1 with a liquid crystal material 2 which is present between two substrates 3, 4 of an elastic material, for example, synthetic resin material, and is provided with electrodes 5, 6. The substrates 2, 3 further comprise adjusting elements 7, 8. The adjusting elements 7 on substrate 3 and the adjusting elements 8 on substrate 4 have substantially complementary sections as viewed in the cross-sections in Figs. 2, 3, 4. Figs. 2a, 3a and 4a show the substrates 3, 4 before they are joined together. In Fig. 2a, the deviation of the adjusting element 8 with respect to the aperture in the complementary pattern of adjusting element 9 has been exaggerated.

In the completed device (Figs. 2b, 3b and 4b) parts of the external sides of the adjusting means 7 on the one substrate 3 are in mechanical contact with parts of the external sides of the adjusting means 8 on the other substrate 4.

Since the adjusting means are in mechanical contact, the desired parts of the substrates are adjusted with respect to each other in such a way that possible misalignment at the start of continuous web processes (as deliberately shown in Fig. 2a) can be corrected at a later stage (by using or not using spontaneous or deliberately introduced stretch (or compression)). As it were, the adjusting means glide along each other in this case.

For the sake of explaining the invention, the cross-sections in Fig. 2 only show the adjusting means 7, 8 and do not show the liquid crystal material. In the plan view of Fig. 1, this liquid crystal material is present in the open spaces between the adjusting means (denoted by circles 2 in Fig. 1).

In the embodiment shown in Figs. 2, 3, the adjusting means are provided with tapering walls in a plane perpendicular to the facing sides of the substrates. When the substrates are being joined together in a continuous web process such as, for example, a reel-to-reel process, the walls (which are tapering in this example) glide along each other so that the adjusting means can thereby be placed against each other. It is sufficient when contact of adjusting elements 7 takes place on only one side as is shown by way of broken lines 8' in Fig. 2b. Neither is it necessary for all adjusting elements 7 of substrate 3 to be in mechanical contact with adjusting elements 8 of substrate 4.

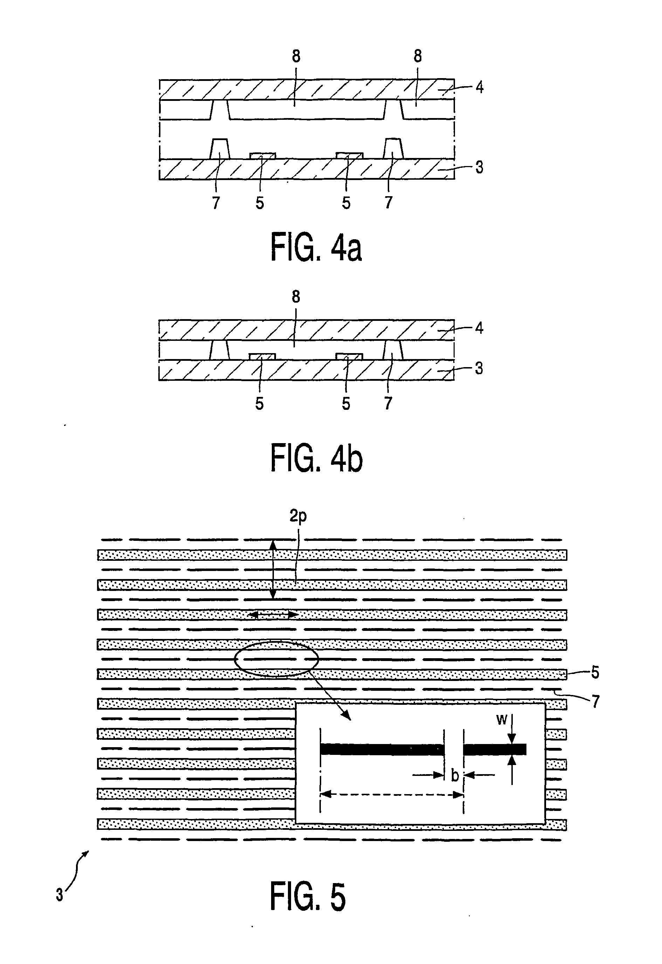

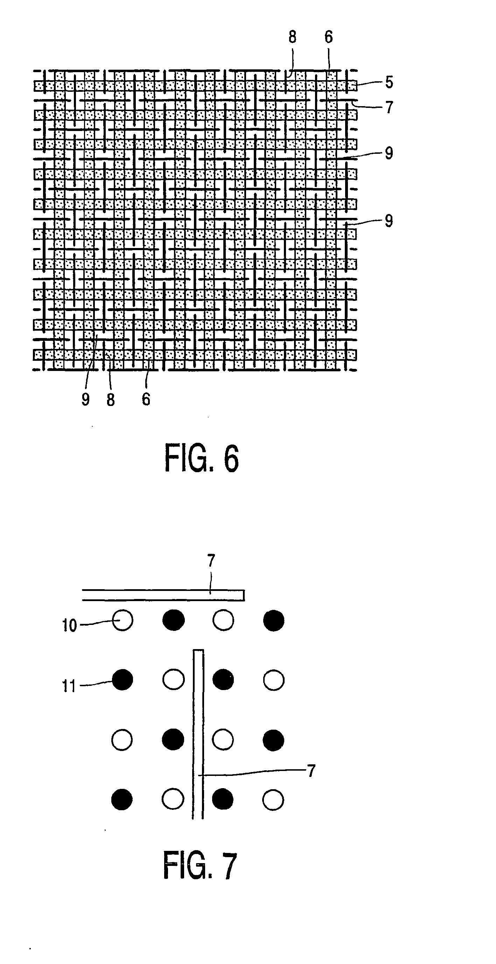

Fig. 5 is a plan view of adjusting elements 7 on substrate 3, situated between ITO electrodes 5. The mutual distance between two adjusting elements 7 belonging to one and the same row is b (see inset in Fig. 5), while the adjusting elements have a width w. If w < b, two such substrates can be turned 90 degrees with respect to each other and, after having been joined together, they constitute the complete display device of Fig. 6. In this device, the adjusting elements 7, 8 form a compartment around a crossing of electrodes (which defines a display element or pixel in a passive display device), which compartments communicate with each other via apertures. In this case, the liquid crystal material can move through the display device (for example, during filling). For placing the substrates against each other for the purpose of a satisfactory mutual adhesion, the projecting sides of the adjusting elements 7, 8 are provided with, for example, an adhesive layer (17 in Fig. 3).

For a good electro-optical effect, it is desirable that the thickness of the layer of liquid crystal material is as uniform as possible. Although the elements 7 often ensure a satisfactory uniformity, it is advantageous, notably for larger pixels or for a plurality of pixels per compartment, to provide spacers simultaneously with the adjusting elements 7, 8 on the substrates, which spacers have the same height as the adjusting elements. Fig. 7 shows diagrammatically how this has been realized with spacers 10 on substrate 3 and spacers 11 on substrate 4. If desired, the sealing edges of the display devices to be formed have already been provided in a similar way on (one of) the substrates or foils.

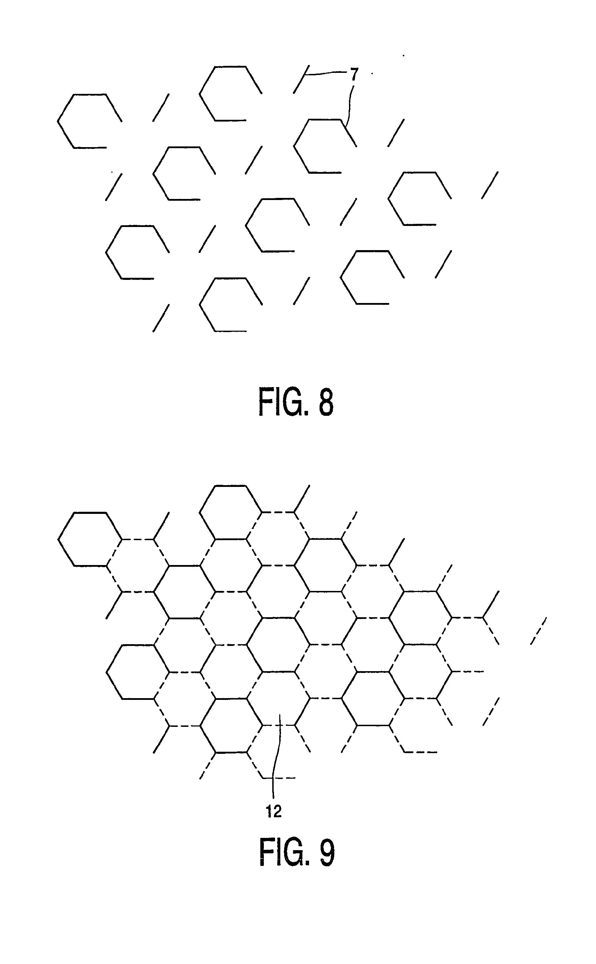

By starting from two substrates with adjusting elements 7, as shown in Fig. 8, the completed display device of Fig. 9 is obtained after joining. Here, the adjusting elements 7 constitute closed compartments 12 after joining.

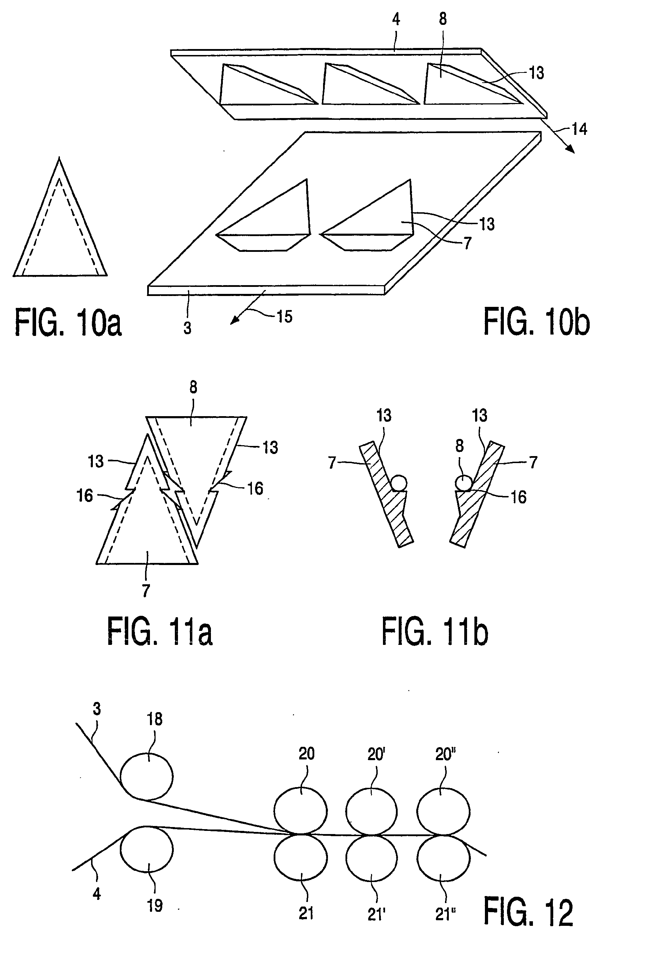

Where the adjusting elements adjoin each other along patterns which, viewed transversely to the substrates, are complementary in the examples described above, the patterns of the adjusting elements 7, 8 in Figs. 10 and 11a have tapenng sides 13 in a plane parallel to the substrates. Although this is not strictly necessary, the elements 7, 8 also have oblique walls. During adjustment, the two substrates are mutually displaced or one of the two substrates is stretched to some extent, for example, in the direction of the arrows 14, 15, whereafter during relaxation the elements 7, 8 move towards each other and, as it were, a snapped joint is obtained in the device of Fig. 11a. This joint may even be further rigidified by giving the sides 13 a profile 16 (for example, a swallow tail profile) as is shown in Fig. 11a. Alternatively, use may be made of non-complementary profiles, as shown in Fig. 11b.

Fig. 12 shows how two foils of substrates 3, 4 provided with the required electrodes, orientation layers and (parts of) sealing edges and, if necessary transistors and further customary elements, as well as the described adjusting elements are supplied via reels (cylinders) 18, 19 in a (continuous) web process. The substrates 3, 4 have a width of, for example, 0.3 to 2.5 meters, while a reel of foil or substrate material has a length of, for example, 30 to 50 meters. Since the reels (cylinders) 18, 19 are usually (coarsely) aligned with respect to each other via sprocket holes on their edges during supply, corresponding parts of display devices to be formed are often mutually displaced to some extent.

The substrate 3 is slightly stretched between the reel 18 and the reel 20. This has a similar effect as that described with reference to Fig. 10 by way of the arrows 14, 15. After the foils have been brought together on a supply mechanism (reels 18, 19, 20, 21) for the purpose of mutual coupling and have been brought into mechanical contact at the area of reels 20, 21, the foils or substrates are mutually adjusted. As described above, this may take place by means of fitting the adjusting elements into each other in the vertical direction (Figs. 1 to 9) or in the horizontal direction (Figs. 10, 11).

After bringing the substrates into mechanical contact (under pressure) in a direction perpendicular to the layers, the assembly of layers is subjected to a (thermal and/or mechanical) relaxation step at the location of the reels 20', 21'. The assembly of finished substrates is then further transported via the reels 20", 21". The separate display devices are then obtained, for example, by cutting or punching them from these finished substrates. Dependent on the structure of the adjusting means, a layer of LC material may be provided on one or both layers prior to the joining of the substrates (foils), notably when closed structures as shown in Figs. 8, 9 are concerned.

As stated in the opening paragraph, the described coupling may also be used for aligning further layers in a display device (color filters, cholesteric layers, PDLC layers, etc.).

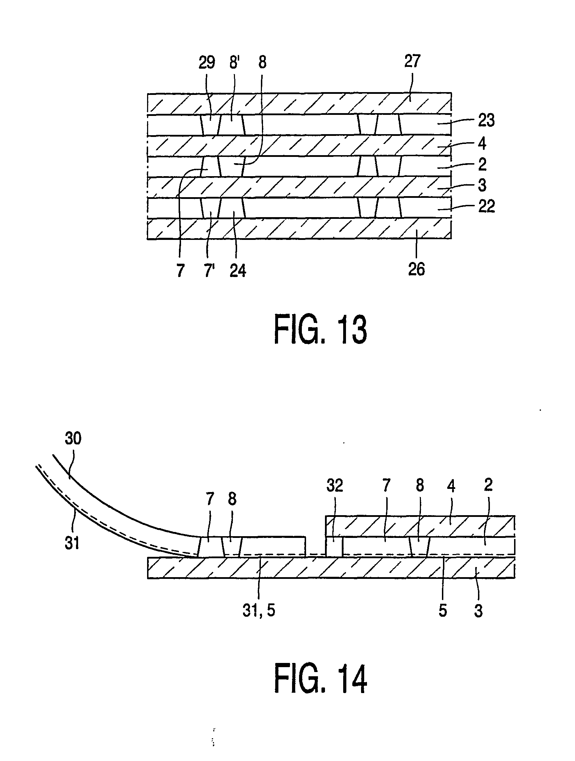

For example, Fig. 13 shows a display device with an electro-optical material 2 between the substrates 3, 4 which, for the purpose of mutual adjustment, are provided with elements 7, 8 but also with adjusting elements 7', 8' on the other side as is shown in, for example, Figs. 10, 11. The adjusting elements 7' are used, for example, to provide a layer of cholesteric material 22, for example, a color filter on a substrate 26 at the desired position on the substrate 3. Similarly, the adjusting elements 8' are used to provide a polarizing layer 23 on a substrate 27 at the desired position on the substrate 4.

Fig. 14 shows how a foil 30 provided with conducting tracks 31 is adjusted via adjusting elements 7, 8, for example, as shown in Figs. 10, 11 and then fixed by means of the same technique. The conducting tracks 31 make contact (outside the plane of the drawing) with electrodes 5 of the display device.

The invention is of course not limited to the embodiments shown, but several variations are possible within the scope of the invention. For example, the invention is also applicable to different types of display such as organic LEDs, but also for coupling synthetic material (plastic) substrates for electronic circuits. Similarly as shown in Fig. 14, a foil 30 provided with conducting tracks 31 and a plastic substrate can be coupled together. Similarly as in Fig. 13, a plurality of cholesteric layers can be stacked, for example, for cholesteric color displays (stacked color CTLC) or a stack of electro-optical elements, for example, a double layer Super Twisted Nematic LCD, with or without compensation or retardation layers.

Although synthetic material (plastic) substrates are mainly referred to in the foregoing, glass substrates, dependent on thickness and surface, may also be sufficiently flexible to be used in the method described. This notably applies when said coupling is only temporary, for example, when a (flexible) substrate to be illuminated in a production step is adjusted with respect to a plane in an illumination device.

If desired, the adjusting means may also function as spacers.

The protective scope of the invention is not limited to the embodiments described. The invention resides in each and every novel characteristic feature and each and every combination of characteristic features. Reference numerals in the claims do not limit their protective scope. Use of the verb "comprise" and its conjugations does not exclude the presence of elements other than those stated in the claims. Use of the article "a" or "an" preceding an element does not exclude the presence of a plurality of such elements.

## Claims

1. A display device comprising an electro-optical material between a first substrate (3) and a second, flexible substrate (4,30), in which facing sides of the substrates are provided with adjusting means (7,8) for aligning the the first and second substrates in the lateral sense; **characterized in that** at least parts of external sides (13) of adjusting means (7) on the first substrate (3) are in mechanical contact with at least parts of external sides (13) of adjusting means (8) on the other substrate (4,30).

2. A display device as claimed in claim 1, **characterized in that** the first substrate (3) is flexible.

3. A display device as claimed in claim 1, **characterized in that** adjusting means (7,8) have at least one tapering side, viewed in a plane perpendicular to the facing sides of the substrates.

4. A display device as claimed in claim 1, **characterized in that** at least one substrate has parts of external sides (13) of adjusting means (7,8) which, viewed in a plane parallel to the substrates, are situated at an acute angle with respect to each other.

5. A display device as claimed in claim 4, **characterized in that** adjusting means (7,8) have tapering walls, viewed in a plane perpendicular to the facing sides of the substrates.

6. A display device as claimed in claim 1, **characterized in that** external sides (13) of the adjusting means (7,8) have patterns which are partly complementary for two engaging sides of adjusting means on different substrates.

7. A display device as claimed in claim 6, **characterized in that** two engaging adjusting means form a snapped joint.

8. A display device as claimed in claim 1, provided with an adhesive layer between the further flexible substrate and the adjusting means of the flexible substrate.

9. A display device as claimed in claim1, provided with a further flexible substrate with adjusting means on at least one side, wherein at least one of the substrates on the sides remote from the further substrate is provided with adjusting means, wherein at least parts of external sides of the adjusting means on one substrate are in mechanical contact with at least parts of external sides of adjusting means on the further flexible substrate.

10. A device comprising a first substrate and at least a further flexible substrate with adjusting means on at least one side, wherein at least facing sides of at least two of the substrates are provided with adjusting means, wherein at least parts of external sides of the adjusting means on one substrate are in mechanical contact with at least parts of external sides of adjusting means on the other substrate.

11. A device as claimed in claim 10, having a contact face between adjusting means, which contact face locally extends at an angle with respect to the substrates.

12. A device as claimed in claim 11, comprising adjusting means having at least one tapering side in a plane perpendicular to the facing sides of the layers.

13. A device as claimed in claim 11, comprising, on at least one substrate, parts of external sides of adjusting means which, viewed in a plane parallel to the substrates, are situated at an acute angle with respect to each other.

14. A device as claimed in claim 13, comprising adjusting means having tapering walls in a plane perpendicular to the facing sides of the layers.

15. A device as claimed in claim 10, **characterized in that** external sides of the adjusting means have patterns which are partly complementary for two engaging sides of adjusting means on different layers.

16. A device as claimed in claim 15, **characterized in that** two engaging adjusting means form a snapped joint.

17. A method of mutually coupling at least two substrates (3,4), each provided with adjusting means (7,8), said method comprising at least a step of joining the substrates together via a supply mechanism (18, 19) and bringing external sides (13) of the adjusting means on a first substrate into mechanical contact with at least parts of external sides of adjusting means of a second, flexible substrate for the purpose of adjustment in the lateral sense.

18. A method as claimed in claim 17, **characterized in that** at least the second, flexible substrate is stretched prior to bringing the substrates into mechanical contact with each other.

19. A method as claimed in claim 17 or 18, **characterized in that** the assembly of substrates, after having been brought into mechanical contact with each other, is subjected to a relaxation step under pressure in a direction perpendicular to the layers.

20. A method as claimed in claim 17 or 18, **characterized in that** the substrates are brought into mechanical contact with each other via a snap process.

21. A method as claimed in claim 17 or 18, **characterized in that** the process of adjustment and coupling takes place continuously.

22. A method as claimed in claim 17 and 18 for manufacturing display devices, **characterized in that** a flexible substrate is provided in one manufacturing step with adjusting means and spacers for the display devices.

## Patentansprüche

1. Anzeigevorrichtung mit einem elektrooptischen Material zwischen einem ersten Substrat (3) und einem zweiten, flexiblen Substrat (4, 30), in dem einander zugewandte Seiten der Substrate mit Ausrichtmitteln (7, 8) zum Ausrichten des ersten und zweiten Substrats in seitlicher Richtung versehen sind, **dadurch gekennzeichnet, dass** mindestens Teile von Außenseiten (13) von Ausrichtmitteln (7) auf dem ersten Substrat (3) in mechanischem Kontakt mit mindestens Teilen von Außenseiten (13) von Ausrichtmitteln (8) auf dem anderen Substrat (4, 30) stehen.

2. Anzeigevorrichtung nach Anspruch 1, **dadurch gekennzeichnet, dass** das erste Substrat (3) flexibel ist.

3. Anzeigevorrichtung nach Anspruch 1, **dadurch gekennzeichnet, dass** Ausrichtmittel (7, 8), in einer Ebene senkrecht zu den einander zugewandten Seiten der Substrate gesehen, mindestens eine konisch verlaufende Seite haben.

4. Anzeigevorrichtung nach Anspruch 1, **dadurch gekennzeichnet, dass** mindestens ein Substrat Teile von Außenseiten (13) von Ausrichtmitteln (7, 8) hat, die, in einer Ebene parallel zu den Substraten gesehen, in einem spitzen Winkel in Bezug zueinander liegen.

5. Anzeigevorrichtung nach Anspruch 4, **dadurch gekennzeichnet, dass** Ausrichtmittel (7, 8), in einer Ebene senkrecht zu den einander zugewandten Seiten der Substrate gesehen, konisch verlaufende Wände haben.

6. Anzeigevorrichtung nach Anspruch 1, **dadurch gekennzeichnet, dass** Außenseiten (13) der Ausrichtmittel (7, 8) Strukturen haben, die für zwei ineinander greifende Seiten von Ausrichtmitteln auf verschiedenen Substraten teilweise komplementär sind.

7. Anzeigevorrichtung nach Anspruch 6, **dadurch gekennzeichnet, dass** zwei ineinander greifende Ausrichtmittel eine Schnappverbindung bilden.

8. Anzeigevorrichtung nach Anspruch 1, die mit einer Klebeschicht zwischen dem weiteren flexiblen Substrat und den Ausrichtmitteln des flexiblen Substrats versehen ist.

9. Anzeigevorrichtung nach Anspruch 1, die mit einem weiteren flexiblen Substrat mit Ausrichtmitteln auf mindestens einer Seite versehen ist, wobei mindestens eines der Substrate auf der dem weiteren Substrat abgewandten Seite mit Ausrichtmitteln versehen ist, wobei mindestens Teile von Außenseiten der Ausrichtmittel auf einem Substrat in mechanischem Kontakt mit mindestens Teilen von Außenseiten der Ausrichtmittel auf dem weiteren flexiblen Substrat stehen.

10. Vorrichtung mit einem ersten Substrat und mindestens einem weiteren flexiblen Substrat mit Ausrichtmitteln auf mindestens einer Seite, wobei mindestens einander zugewandte Seiten von mindestens zwei der Substrate mit Ausrichtmitteln versehen sind, wobei mindestens Teile von Außenseiten der Ausrichtmittel auf einem Substrat in mechanischen Kontakt mit mindestens Teilen von Außenseiten der Ausrichtmittel auf dem anderen Substrat stehen.

11. Vorrichtung nach Anspruch 10 mit einer Kontaktfläche zwischen Ausrichtmitteln, wobei die Kontaktfläche sich in Bezug auf die Substrate lokal unter einem Winkel ausdehnt.

12. Vorrichtung nach Anspruch 11 mit Ausrichtmitteln, die in einer Ebene senkrecht zu den einander zugewandten Seiten der Schichten mindestens eine konisch verlaufende Seite haben.

13. Vorrichtung nach Anspruch 11 mit, mindestens auf einem Substrat, Teilen von Außenseiten von Ausrichtmitteln, die, in einer Ebene parallel zu den Substraten gesehen, in Bezug zueinander in einem spitzen Winkel liegen.

14. Vorrichtung nach Anspruch 13 mit Ausrichtmitteln, die in einer Ebene senkrecht zu den einander zugewandten Seiten der Schichten konisch verlaufende Wände haben.

15. Vorrichtung nach Anspruch 10, **dadurch gekennzeichnet, dass** Außenseiten der Ausrichtmittel Strukturen haben, die für zwei ineinander greifende Seiten von Ausrichtmitteln auf verschiedenen Schichten teilweise komplementär sind.

16. Vorrichtung nach Anspruch 15, **dadurch gekennzeichnet, dass** zwei ineinander greifende Ausrichtmittel eine Schnappverbindung bilden.

17. Verfahren zur gegenseitigen Kopplung von mindestens zwei Substraten (3, 4), jedes mit Ausrichtmitteln (7, 8) versehen, wobei das genannte Verfahren mindestens einen Schritt, die Substrate über einen Zufuhrmechanismus (18, 19) zusammenzufügen und Außenseiten (13) der Ausrichtmittel auf einem ersten Substrat mit mindestens Teilen von Außenseiten von Ausrichtmitteln eines zweiten, flexiblen Substrats zu dem Zweck des Ausrichtens in seitlicher Richtung in mechanischen Kontakt zu bringen, umfasst.

18. Verfahren nach Anspruch 17, **dadurch gekennzeichnet, dass** mindestens das zweite, flexible Substrat gestreckt wird, bevor die Substrate in mechanischen Kontakt miteinander gebracht werden.

19. Verfahren nach Anspruch 17 oder 18, **dadurch gekennzeichnet, dass** die Baugruppe der Substrate, nachdem diese in einer Richtung senkrecht zu den Schichten unter Druck in mechanischen Kontakt miteinander gebracht worden sind, einem Entspannungsschritt ausgesetzt wird.

20. Verfahren nach Anspruch 17 oder 18, **dadurch gekennzeichnet, dass** die Substrate miteinander über einen Einschnappprozess in mechanischen Kontakt gebracht werden.

21. Verfahren nach Anspruch 17 oder 18, **dadurch gekennzeichnet, dass** der Prozess des Ausrichtens und der Kopplung kontinuierlich stattfindet.

22. Verfahren nach Anspruch 17 und 18 zur Herstellung von Anzeigevorrichtungen, **dadurch gekennzeichnet, dass** in einem einzigen Herstellungsschritt ein flexibles Substrat mit Ausrichtmitteln und Abstandshaltern für die Anzeigevorrichtungen versehen wird.

## Revendications

1. Dispositif d'affichage comprenant un matériau optoélectronique entre un premier substrat (3) et un second substrat souple (4, 30), dans lequel des côtés se faisant face des substrats sont dotés de moyens d'ajustement (7,8) afin d'aligner les premier et second substrats dans le sens latéral, **caractérisé en ce qu'**au moins des parties de côtés externes (13) des moyens d'ajustement (7) sur le premier substrat (3) présentent un contact mécanique avec au moins des parties de côtés externes (13) des moyens d'ajustement (8) sur l'autre substrat (4,30).

2. Dispositif d'affichage suivant la revendication 1, **caractérisé en ce que** le premier substrat (3) est souple.

3. Dispositif d'affichage suivant la revendication 1, **caractérisé en ce que** les moyens d'ajustement (7, 8) ont au moins un côté présentant un amincissement, lorsque l'on regarde dans un plan perpendiculaire aux côtés se faisant face des substrats.

4. Dispositif d'affichage suivant la revendication 1, **caractérisé en ce qu'**au moins un substrat comprend des parties de côtés externes (13) de moyens d'ajustement (7, 8) qui, lorsque l'on regarde dans un plan parallèle aux substrats, sont placées de manière à former un angle aigu les unes avec les autres.

5. Dispositif d'affichage suivant la revendication 4, **caractérisé en ce que** les moyens d'ajustement (7, 8) ont des parois présentant un amincissement, lorsque l'on regarde dans un plan perpendiculaire aux côtés se faisant face des substrats.

6. Dispositif d'affichage suivant la revendication 1, **caractérisé en ce que** les côtés externes (13) des moyens d'ajustement (7,8) présentent des motifs qui sont en partie complémentaires pour deux côtés venant en prise des moyens d'ajustement sur des substrats différents.

7. Dispositif d'affichage suivant la revendication 6, **caractérisé en ce que** les deux moyens d'ajustement venant en prise forment un joint à déclic.

8. Dispositif d'affichage suivant la revendication 1, doté d'une couche adhésive entre le substrat souple supplémentaire et les moyens d'ajustement du substrat souple.

9. Dispositif d'affichage suivant la revendication 1, doté d'un substrat souple supplémentaire avec des moyens d'ajustement sur au moins un côté, au moins un des substrats sur les côtés à distance du substrat supplémentaire étant doté de moyens d'ajustement, et au moins des parties des côtés externes des moyens d'ajustement sur un substrat étant en contact mécanique avec au moins des parties de côtés externes des moyens d'ajustement sur le substrat souple supplémentaire.

10. Dispositif comprenant un premier substrat et au moins un substrat souple supplémentaire doté de moyens d'ajustement sur au moins un côté, au moins des côtés se faisant face d'au moins deux substrats étant dotés de moyens d'ajustement, et au moins des parties de côtés externes des moyens d'ajustement sur un substrat présentant un contact mécanique avec au moins des parties de côtés externes de moyens d'ajustement sur l'autre substrat.

11. Dispositif suivant la revendication 10, présentant une face de contact entre des moyens d'ajustement, laquelle face de contact s'étend localement en formant un angle par rapport aux substrats.

12. Dispositif suivant la revendication 11, comprenant des moyens d'ajustement dotés d'au moins un côté présentant un amincissement, lorsque l'on regarde dans un plan perpendiculaire aux côtés se faisant face des couches.

13. Dispositif suivant la revendication 11, comprenant, sur au moins un substrat, des parties de côtés externes de moyens d'ajustement qui, lorsque l'on regarde dans un plan parallèle aux substrats, sont placées de manière à former un angle aigu les unes avec les autres.

14. Dispositif suivant la revendication 13, comprenant des moyens d'ajustement avec des parois présentant un amincissement, dans un plan perpendiculaire aux côtés se faisant face des couches.

15. Dispositif suivant la revendication 10, **caractérisé en ce que** des côtés externes des moyens d'ajustement présentent des motifs qui sont en partie complémentaires pour deux côtés venant en prise de moyens d'ajustement sur des couches différentes.

16. Dispositif suivant la revendication 15, **caractérisé en ce que** les deux moyens d'ajustement venant en prise forment un joint à déclic.

17. Procédé destiné à coupler de manière réciproque au moins deux substrats (3, 4), chacun étant doté de moyens d'ajustement (7, 8), ledit procédé comprenant au moins une étape d'assemblage des substrats par le biais d'un mécanisme d'alimentation (18, 19), et de mise en contact mécanique de côtés externes (13) des moyens d'ajustement sur un premier substrat avec au moins des parties de côtés externes de moyens d'ajustement d'un second substrat souple en vue d'un ajustement dans le sens latéral.

18. Procédé suivant la revendication 17, **caractérisé en ce qu'**au moins le second substrat souple est étiré avant de mettre les substrats souples en contact mécanique l'un avec l'autre.

19. Procédé suivant la revendication 17 ou 18, **caractérisé en ce que** l'assemblage de substrats, après leur mise en contact mécanique l'un avec l'autre, est soumis à une étape de relâchement sous pression dans une direction perpendiculaires aux couches.

20. Procédé suivant la revendication 17 ou 18, **caractérisé en ce que** les substrats sont mis en contact mécanique les uns avec les autres par le biais d'un processus à déclic.

21. Procédé suivant la revendication 17 ou 18, **caractérisé en ce que** le processus d'ajustement et de couplage a lieu de manière continue.

22. Procédé suivant la revendication 17 ou 18, destiné à fabriquer des dispositifs d'affichage, **caractérisé en ce qu'**un substrat souple est doté, au cours d'une étape de fabrication, de moyens d'ajustement et d'espaceurs pour les dispositifs d'affichage.
